# EUROPÄISCHE PATENTANMELDUNG

(11) **EP 3 797 936 A1**
(43) Veröffentlichungstag der Anmeldung: **31.03.2021**
(21) Anmeldenummer: 19199080.3
(22) Anmeldetag: 24.09.2019
(51) Int. Cl.: B25J 9/16

(54) **VERFAHREN ZUM PRÄZISIEREN EINER POSITION UND/ODER ORIENTIERUNG EINES GERÄTEKOPFES**

(71) Anmelder: Hilti Aktiengesellschaft, 9494 Schaan (LI)
(72) Erfinder: Korl, Sascha, 9470 Buchs (CH); Gawel, Abel, 8606 Greifensee (CH); Blum, Hermann, 8046 Zürich (CH); Sandy, Timothy, 8008 Zürich (CH); Hutter, Marco, 9230 Flawil (CH); Siegwart, Roland, 6430 Schwyz (CH)
(74) Vertreter: Hilti Aktiengesellschaft Corporate Intellectual Property

(57) **Zusammenfassung**

Verfahren zum Präzisieren einer Position und/oder Orientierung eines Gerätekopfes (10) in einer Messumgebung (11) mittels einer Distanzmesseinrichtung (16), die eine Anzahl von M, M ≥ 1 Distanzmesssensoren (18) umfasst und die mit dem Gerätekopf (10) verbunden ist, und einer Kontrolleinrichtung (17), die mit der Distanzmesseinrichtung (16) und einer On-Board-Sensoreinrichtung (14) kommunizierend verbunden ist, wobei die Position und/oder Orientierung des Gerätekopfes (10) mittels der On-Board-Sensoreinrichtung (14) bestimmt und an die Kontrolleinrichtung (17) übermittelt wurde.

## Beschreibung

### Technisches Gebiet

Die vorliegende Erfindung betrifft ein Verfahren zum Präzisieren einer Position und/oder Orientierung eines Gerätekopfes gemäß dem Oberbegriff des Anspruchs 1.

### Stand der Technik

Die Automatisierung von Mess- und Montageaufgaben mittels Robotern erfasst zunehmend die Bauindustrie. Die Anwendung von Robotern erfolgt bisher vor allem in automatisierten Montagelinien, die durch feste Positionen und konstante Bedingungen gekennzeichnet sind. Im Gegensatz zu Montagelinien sind Baustellen räumlich komplexe Messumgebungen, die sich durch den Baufortschritt ständig verändern. Für Montageaufgaben auf der Baustelle, wie beispielsweise das Erstellen von Bohrlöchern, Erstellen von Schlitzen und das Montieren von Installationstechnik, sind Genauigkeiten im Millimeter-Bereich erforderlich. Diese Genauigkeiten im Millimeter-Bereich werden von bekannten On-Board-Sensoreinrichtungen, wie beispielsweise LiDAR-Sensoreinrichtungen, nicht erreicht, was die Einsatzmöglichkeiten dieser On-Board-Sensoreinrichtungen für Mess- und Montageaufgaben mittels Robotern auf Baustellen stark einschränkt.

Um die erforderlichen Genauigkeiten im Millimeter-Bereich einzuhalten, nutzen verfügbare Vorrichtungen aus dem Stand der Technik auf Baustellen externe Sensoreinrichtungen, die nicht mit dem Gerätekopf am Roboter verbunden sind. Externe Sensoreinrichtungen sind beispielsweise als Totalstationen ausgebildet; Nachteil dieser externen Sensoreinrichtungen ist, dass vor ihrer Nutzung eine Referenzierung zwischen der externen Sensoreinrichtung und der Messumgebung erfolgen muss, außerdem eignen sich Totalstationen nur zum Bestimmen der Position und nicht der Orientierung. Alternativ können in der Messumgebung der Baustelle aktive oder passive Zielobjekte positioniert werden, deren Positionen und/oder Orientierungen vorab bestimmt werden, wobei die Position und/oder Orientierung des Gerätekopfes mithilfe der bekannten Positionen und/oder Orientierungen der Zielobjekte ermittelt wird. Nachteile der Zielobjekte ist, dass vor der Nutzung der Vorrichtung die Zielobjekte in der Messumgebung der Baustelle positioniert werden müssen.

### Darstellung der Erfindung

Die Aufgabe der vorliegenden Erfindung besteht darin, eine Vorrichtung und ein Verfahren zu entwickeln, mit denen die Position und/oder Orientierung eines Gerätekopfes mit der erforderlichen Genauigkeit im Millimeter-Bereich bestimmt werden kann. Dabei soll die Vorrichtung am Gerätekopf angeordnet sein.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das erfindungsgemäße Verfahren zum Präzisieren einer Position und/oder Orientierung eines Gerätekopfes in einer Messumgebung mittels einer Distanzmesseinrichtung und einer Kontrolleinrichtung ist gekennzeichnet durch eine Folge eines ersten, zweiten, dritten und vierten Schrittes, die N-fach, N ≥ 1 durchgeführt wird, wobei:
▪ im ersten Schritt der Folge wird der Gerätekopf in der Messumgebung in einer Messposition angeordnet, wobei für die Messposition von der Kontrolleinrichtung Pose-Daten bestimmt werden,
▪ im zweiten Schritt der Folge führen die Distanzmesssensoren eine Distanzmessung durch und übermitteln ihre gemessenen Distanzwerte an die Kontrolleinrichtung,
▪ im dritten Schritt werden aus dem Geometriemodell der Messumgebung und den Pose-Daten für die Messposition zu den gemessenen Distanzwerten entsprechende geschätzte Distanzwerte bestimmt und
▪ im vierten Schritt werden die Abweichungen zwischen den gemessenen Distanzwerten und den entsprechenden geschätzten Distanzwerten berechnet und als Fehlerwerte gespeichert,
und nach der N-ten Folge des ersten bis vierten Schrittes wird mithilfe der Fehlerwerte der ersten bis N-ten Folge eine Fehlerminimierung für die Position und/oder Orientierung des Gerätekopfes durchgeführt und die Position und/oder Orientierung des Gerätekopfes wird von der Kontrolleinrichtung präzisiert.

Die Idee der vorliegenden Erfindung besteht darin, die Position und/oder Orientierung des Gerätekopfes zunächst mittels einer bekannten On-Board-Sensoreinrichtung zu bestimmen und diese Position und/oder Orientierung des Gerätekopfes anschließend mittels einer mit dem Gerätekopf verbundenen Distanzmesseinrichtung und einem Geometriemodell der Messumgebung zu präzisieren. Als On-Board-Sensoreinrichtung wird beispielsweise eine LiDAR-Sensoreinrichtung eingesetzt, die mit dem Gerätekopf verbunden ist und die die Position und/oder Orientierung des Gerätekopfes mit einer Genauigkeit im Zentimeter-Bereich bestimmen kann. Die Distanzmesseinrichtung umfasst mindestens einen Distanzmesssensor, wobei mehrere Distanzmesssensoren die Genauigkeit erhöhen oder die Anzahl an Folgen des ersten bis vierten Schrittes reduzieren.

Der Gerätekopf wird in N verschiedenen Messpositionen angeordnet und in jeder Messposition wird die Folge des ersten bis vierten Schrittes durchgeführt. Der Gerätekopf wird im ersten Schritt der Folge in der Messumgebung in einer Messposition angeordnet, wobei für die Messposition von der Kontrolleinrichtung Pose-Daten bestimmt werden. Die Distanzmesssensoren führen im zweiten Schritt der Folge eine Distanzmessung durch und übermitteln ihre gemessenen Distanzwerte an die Kontrolleinrichtung. Im dritten Schritt werden aus dem Geometriemodell der Messumgebung und den Pose-Daten zu den gemessenen Distanzwerten entsprechende geschätzte Distanzwerte bestimmt. Die Abweichungen zwischen den gemessenen Distanzwerten und den entsprechenden geschätzten Distanzwerten werden im vierten Schritt der Folge berechnet und als Fehlerwerte gespeichert. Nach der N-ten Folge des ersten bis vierten Schrittes wird mithilfe der Fehlerwerte der ersten bis N-ten Folge eine Fehlerminimierung für die Position und/oder Orientierung des Gerätekopfes durchgeführt und die Position und/oder Orientierung des Gerätekopfes wird von der Kontrolleinrichtung präzisiert.

In einer Variante wird die erste Folge des ersten bis vierten Schrittes in einer ersten Messposition durchgeführt, wobei die erste Messposition der Position und/oder Orientierung des Gerätekopfes entspricht, die mittels der On-Board-Sensoreinrichtung bestimmt wurde, und als erste Pose-Daten für die erste Folge werden die Position und/oder Orientierung des Gerätekopfes verwendet, die mittels der On-Board-Sensoreinrichtung bestimmt wurde. Die erste Messposition, in der die erste Folge des ersten bis vierten Schrittes durchgeführt wird, entspricht der Position und/oder Orientierung des Gerätekopfes, die mithilfe des erfindungsgemäßen Verfahrens präzisiert werden soll. Die Präzisierung erfolgt unter anderem mithilfe der Fehlerwerte der ersten Folge, wobei die Präzisierung vorgenommen wird, wenn die Folge des ersten bis vierten Schrittes N-fach durchgeführt wurde. Über die Anzahl der Distanzmesssensoren kann die Anzahl an Fehlerwerten erhöht werden, die in einer Folge bestimmt werden.

In einer alternativen Variante wird die Folge des ersten bis vierten Schrittes zweifach in einer ersten Messposition und einer zweiten Messposition durchgeführt, wobei die erste Messposition der Position und/oder Orientierung des Gerätekopfes entspricht, die mittels der On-Board-Sensoreinrichtung bestimmt wurde, die zweite Messposition von der ersten Messposition verschieden ist und die Bewegung des Gerätekopfes aus der ersten Messposition in die zweite Messposition von einer weiteren On-Board-Sensoreinrichtung in Form von ersten Bewegungsdaten erfasst wird. Die erste Messposition, in der die erste Folge des ersten bis vierten Schrittes durchgeführt wird, entspricht der Position und/oder Orientierung des Gerätekopfes, die mithilfe des erfindungsgemäßen Verfahrens präzisiert werden soll. Je grösser die Anzahl N der Folgen ist, umso mehr Fehlerwerte können in der Fehlerminimierung verwendet werden.

Bevorzugt werden die zweiten Pose-Daten für die zweite Messposition aus den ersten Pose-Daten der ersten Messposition und den ersten Bewegungsdaten bestimmt. Die zweiten Pose-Daten für die zweite Messposition werden im dritten Schritt der Folge des ersten bis vierten Schrittes benötigt, um im Geometriemodell der Messumgebung zu den gemessenen Distanzwerten entsprechende geschätzte Distanzwerte zu bestimmen.

Alternativ werden die zweiten Pose-Daten für die zweite Messposition aus optimierten ersten Pose-Daten und den ersten Bewegungsdaten bestimmt, wobei die optimierten ersten Pose-Daten aus der Position und/oder Orientierung des Gerätekopfes, die mittels der On-Board-Sensoreinrichtung bestimmt wurde, durch Fehlerminimierung mittels der Fehlerwerte der ersten Folge bestimmt werden. Ziel des erfindungsgemäßen Verfahrens ist es, die Position und/oder Orientierung des Gerätekopfes, die mittels der On-Board-Sensoreinrichtung bestimmt wurde, zu präzisieren.

In einer weiteren alternativen Variante wird die Folge des ersten bis vierten Schrittes mindestens dreifach durchgeführt, wobei die Bewegung des Gerätekopfes aus einer Messposition in eine neue Messposition von der weiteren On-Board-Sensoreinrichtung in Form von Bewegungsdaten erfasst wird. Die erste Messposition, in der die erste Folge des ersten bis vierten Schrittes durchgeführt wird, entspricht der Position und/oder Orientierung des Gerätekopfes, die mithilfe des erfindungsgemäßen Verfahrens präzisiert werden soll. Der Gerätekopf wird aus der ersten Messposition in eine zweite Messposition bewegt, wobei die Bewegung des Gerätekopfes aus der ersten in die zweite Messposition von der weiteren On-Board-Sensoreinrichtung als erste Bewegungsdaten erfasst wird, und der Gerätekopf wird aus der zweiten Messposition in eine dritte Messposition bewegt, wobei die Bewegung aus der zweiten in die dritte Messposition von der weiteren On-Board-Sensoreinrichtung als zweite Bewegungsdaten erfasst wird.

Bevorzugt werden die Pose-Daten für die neue Messposition aus den ersten Pose-Daten der ersten Messposition und den Bewegungsdaten bestimmt. Die Pose-Daten für die neue Messposition werden im dritten Schritt der Folge des ersten bis vierten Schrittes benötigt, um in Geometriemodell der Messumgebung zu den gemessenen Distanzwerten entsprechende geschätzte Distanzwerte zu bestimmen.

Alternativ werden die Pose-Daten für die neue Messposition aus optimierten ersten Pose-Daten und den Bewegungsdaten bestimmt, wobei die optimierten ersten Pose-Daten aus der Position und/oder Orientierung des Gerätekopfes, die mittels der On-Board-Sensoreinrichtung bestimmt wurde, durch Fehlerminimierung mittels der Fehlerwerte der durchgeführten Folgen des ersten bis vierten Schrittes bestimmt werden. Die weitere On-Board-Sensoreinrichtung, die mit dem Gerätekopf verbunden ist, erfasst die Bewegung des Gerätekopfes zwischen sämtlichen Messpositionen.

In einer Weiterentwicklung des Verfahrens wird nach der N-ten Folge des ersten bis vierten Schrittes im Rahmen der Fehlerminimierung ein Fehlermass bestimmt. Dieses Fehlermass bewertet die Qualität bzw. Genauigkeit, mit der die Position und/oder Orientierung des Gerätekopfes präzisiert wird.

Bevorzugt wird das Fehlermass mit einem Maximalfehler verglichen, wobei für den Fall, dass das Fehlermass grösser als der Maximalfehler ist, der Gerätekopf in eine neue Messposition bewegt und die Folge des ersten bis vierten Schrittes für die neue Messposition durchgeführt wird. Die Folge des ersten bis vierten Schrittes wird solange durchgeführt, bis die Position und/oder Orientierung des Gerätekopfes mit der geforderten Qualität bzw. Genauigkeit präzisiert wurde.

Die vorliegende Erfindung betrifft außerdem eine Vorrichtung zum Präzisieren einer Position und/oder Orientierung eines Gerätekopfes mithilfe eines Verfahrens nach einem der Ansprüche 1 bis 10. Die Position und/oder Orientierung des Gerätekopfes wird zunächst mittels einer bekannten On-Board-Sensoreinrichtung bestimmt und diese Position und/oder Orientierung des Gerätekopfes wird anschließend mittels der erfindungsgemäßen Vorrichtung präzisiert.

Bevorzugt weist die Vorrichtung eine Distanzmesseinrichtung, die eine Anzahl von M, M ≥ 1 Distanzmesssensoren umfasst und die mit dem Gerätekopf verbunden ist, und eine Kontrolleinrichtung, die mit der Distanzmesseinrichtung und einer mit dem Gerätekopf verbundenen On-Board-Sensoreinrichtung kommunizierend verbunden ist, auf. Die Distanzmesseinrichtung umfasst einen oder mehrere Distanzmesssensoren, deren Messrichtungen sich voneinander unterscheiden. Durch eine größere Anzahl an Distanzmesssensoren wird die Genauigkeit erhöht oder die Anzahl an Folgen des ersten bis vierten Schrittes kann reduziert werden.

Besonders bevorzugt weist die Vorrichtung eine weitere On-Board-Sensoreinrichtung auf, die am Gerätekopf angebracht ist und die mit der Kontrolleinrichtung kommunizierend verbunden ist. Die weitere On-Board-Sensoreinrichtung erfasst die Bewegung des Gerätekopfes aus einer Messposition in eine neue Messposition in Form von Bewegungsdaten, die an die an die Kontrolleinrichtung übermittelt werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: einen Gerätekopf, dessen Position und/oder Orientierung in einer Messumgebung mithilfe einer erfindungsgemäßen Vorrichtung präzisiert werden soll;
- FIG. 2: ein Geometriemodell der Messumgebung, in der die Position und/oder Orientierung des Gerätekopfes präzisiert werden soll; und
- FIGN. 3A-C: den Gerätekopf der FIG. 1 in einer ersten Messposition (FIG. 3A), einer zweiten Messposition (FIG. 3B) und einer dritten Messposition (FIG. 3C).

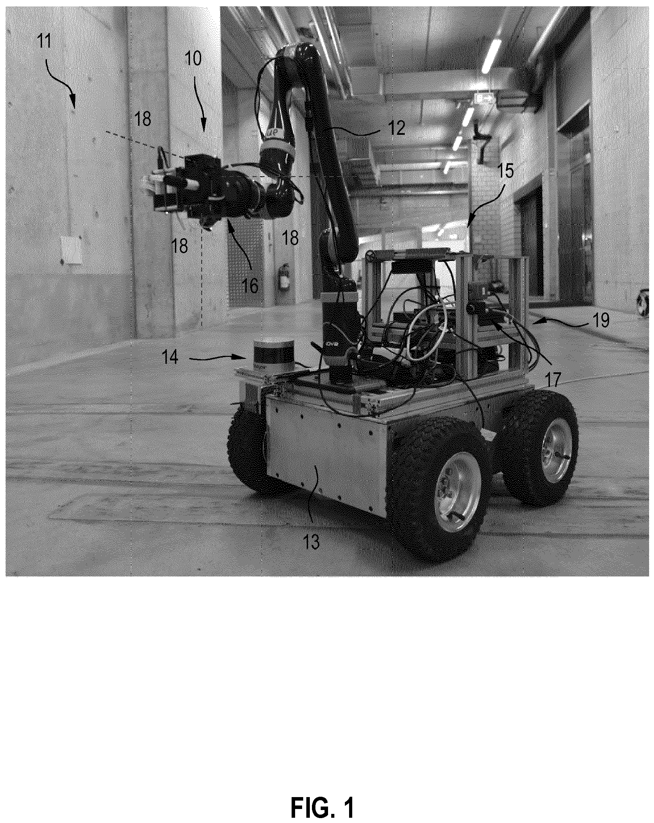

**FIG. 1** zeigt einen Gerätekopf **10**, dessen Position und/oder Orientierung in einer Messumgebung **11** mit einer Genauigkeit im Millimeter-Bereich bestimmt werden soll. Unter dem Begriff "Gerätekopf" werden sämtliche Bearbeitungsköpfe, Montageköpfe und Messköpfe zusammengefasst, die für die Durchführung von Bearbeitungs-, Montage- oder Messaufgaben vorgesehen sind. Der Gerätekopf 10 kann beispielsweise als Schleifkopf, Schweißkopf, Bohrkopf oder Detektorkopf ausgebildet sein.

Im Ausführungsbeispiel ist der Gerätekopf 10 mit einem Roboterarm **12** verbunden, der auf einer Arbeitsplattform **13** montiert ist. Der Roboterarm 12 ist als Mehrachs-Roboterarm mit mehreren Rotationsachsen ausgebildet und die Arbeitsplattform 13 ist über motorisch angetriebene Räder, die auf zwei Achsen montiert sind, in einer Ebene verstellbar. Der Roboterarm 12 besteht aus mehreren starren Gliedern, die durch Drehgelenke oder Schubgelenke verbunden sind, wobei die Dreh- oder Schubgelenke durch gesteuerte Antriebe verstellt werden können. Die notwendige Anzahl der Dreh- oder Schubgelenke ist von der Art des Gerätekopfes 10 und der geplanten Anwendung abhängig.

Durch die Kombination des Roboterarms 12 mit der Arbeitsplattform 13 kann der Raumbereich des Gerätekopfes 10 vergrößert werden. Die Arbeitsplattform 13 ermöglicht es, den am Roboterarm 12 montierten Gerätekopf 10 zumindest grob in der Messumgebung 11 zu positionieren, wobei die grobe Positionierung in zwei Dimensionen in der Ebene erfolgt. Anstelle der motorisch verstellbaren Arbeitsplattform 13 kann der Roboterarm 12 auf einer manuell verstellbaren Arbeitsplattform montiert werden. Eine motorisch verstellbare Arbeitsplattform 13 erlaubt eine bedienerlose Positionierung des Gerätekopfes 10, wohingegen eine manuell verstellbare Arbeitsplattform 13 vom Bediener verstellt werden muss. Anstelle der verstellbaren Arbeitsplattform 13 kann der Roboterarm 12 mit einem Standfuss verbunden, der einen sicheren Stand des Roboterarms 12 erlaubt; der Standfuss kann vom Bediener verstellt werden, um den Raumbereich zu vergrößern. Grundsätzlich kann der Gerätekopf 10 auch ohne Roboterarm und/oder Arbeitsplattform eingesetzt werden. Die Anzahl der Freiheitsgrade des Gerätekopfes 10 kann stark variieren und ist von der Art des Gerätekopfes 10 und der geplanten Anwendung abhängig. Der Gerätekopf 10 kann in einer oder mehreren Translationsrichtungen, in einer oder mehreren Rotationsrichtungen oder in einer Kombination aus Translationsrichtungen und Rotationsrichtungen verstellbar sein.

Die Position und/oder Orientierung des Gerätekopfes 10 wird mithilfe einer On-Board-Sensoreinrichtung **14** bestimmt und anschließend mithilfe einer Vorrichtung **15** zum Präzisieren der Position und/oder Orientierung des Gerätekopfes 10 präzisiert. Die Vorrichtung 15 umfasst eine Distanzmesseinrichtung **16** und eine Kontrolleinrichtung **17**, die mit der On-Board-Sensoreinrichtung 14 und mit der Distanzmesseinrichtung 16 kommunizierend verbunden ist. Die On-Board-Sensoreinrichtung 14 dient dazu, die Position und/oder Orientierung des Gerätekopfes 10 zu bestimmen; als On-Board-Sensoreinrichtung 14 kann beispielsweise eine LiDAR-Sensoreinrichtung eingesetzt werden. Die Distanzmesseinrichtung 16 umfasst eine Anzahl von M, M ≥ 1 Distanzmesssensoren **18**, deren Messrichtungen sich voneinander unterscheiden. Im Ausführungsbeispiel weist die Distanzmesseinrichtung 16 drei Distanzmesssensoren 18 auf, die rechtwinklig zueinander angeordnet sind. Die Distanzmesseinrichtung 16 ist mit dem Gerätekopf 10 verbunden und dient dazu, die Position und/oder Orientierung des Gerätekopfes 10, die mittels der On-Board-Sensoreinrichtung 14 bestimmt wurde, zu präzisieren.

Um die Position und/oder Orientierung des Gerätekopfes 10 zu präzisieren, wird der Gerätekopf 10 in verschiedenen Messpositionen angeordnet, in denen die Distanzmesssensoren 18 der Distanzmesseinrichtung 16 eine Distanzmessung ausführen. Die Bewegung des Gerätekopfes 10 aus einer Messposition in eine neue Messposition wird von einer weiteren On-Board-Sensoreinrichtung **19**, die mit dem Gerätekopf 10 verbunden ist, in Form von Bewegungsdaten erfasst; die weitere On-Board-Sensoreinrichtung 19 ist beispielsweise als Beschleunigungssensor ausgebildet.

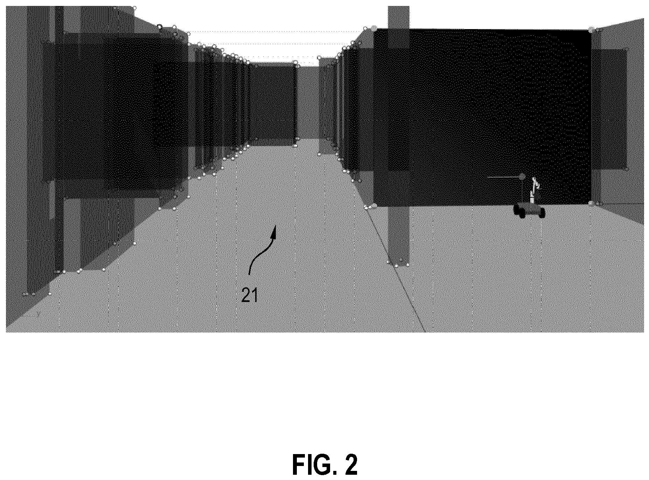

Die Messumgebung 11 ist in einem Geometriemodell **21** abgebildet, welches in **FIG. 2** dargestellt ist. Das Geometriemodell 21 bildet die Objekte der Messumgebung 11, die Begrenzungsflächen bilden, ab und ermöglicht, die Abstände zwischen dem Gerätekopf 10 und den Begrenzungsflächen abzuschätzen. Die Abstände werden in den Richtungen abgeschätzt, die den Messrichtungen der Distanzmesssensoren 18 entsprechen. Als Geometriemodell 21 kann beispielsweise ein mit CAD-Unterstützung hergestelltes Konstruktionsmodell der Messumgebung 11 verwendet werden. Alternativ kann die Messumgebung 11 mittels eines Laserscanners abgescannt werden und aus den Scandaten wird ein Geometriemodell der Messumgebung 11 erstellt. Das Geometriemodell 21 kann die Messumgebung 11 vollständig oder nur teilweise abbilden. Für die vorliegende Anmeldung sind die Oberflächen der Messumgebung 11 maßgeblich, die als Reflektionsfläche oder Streufläche für eine Distanzmessung verwendet werden. Die geschätzten Distanzwerte, die mit den gemessenen Distanzwerten verglichen werden, werden mittels bekannter Raytracing-Verfahren aus dem Geometriemodell 21 bestimmt.

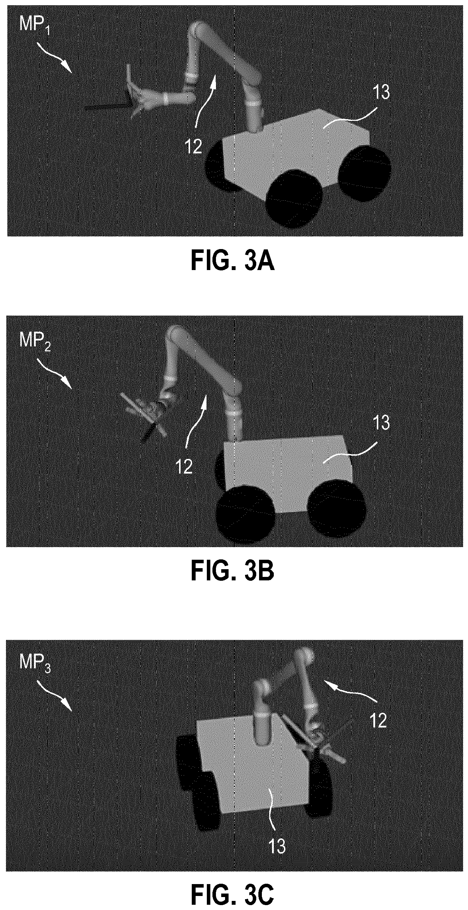

Das erfindungsgemäße Verfahren zum Präzisieren der Position und/oder Orientierung des Gerätekopfes 10 ist gekennzeichnet durch eine Folge eines ersten, zweiten, dritten und vierten Schrittes, die mindestens einfach, bevorzugt mehrfach (N-fach) durchgeführt wird. Der Gerätekopf 10 wird in N, N ≥ 1 verschiedenen Messpositionen angeordnet und in jeder Messposition wird die Folge des ersten bis vierten Schrittes durchgeführt. Im Ausführungsbeispiel wird die Folge des ersten, zweiten, dritten und vierten Schrittes dreifach durchgeführt. Der Gerätekopf 10 wird in der Messumgebung 11 in einer ersten Messposition **MP₁** (**FIG. 3A**), einer zweiten Messposition **MP₂** (**FIG. 3B**) und einer dritten Messposition **MP₃** (**FIG. 3C**) angeordnet.

Der Gerätekopf 10 ist im ersten Schritt der ersten Folge in der Messumgebung 11 in der ersten Messposition MP₁ (FIG. 3A) angeordnet. Die erste Messposition MP₁ entspricht der Position und/oder Orientierung des Gerätekopfes 10, die von der Vorrichtung 15 präzisiert werden soll. Für die erste Messposition MP₁ werden erste Pose-Daten bestimmt, wobei als erste Pose-Daten die Position und/oder Orientierung des Gerätekopfes 10 verwendet wird, die mittels der On-Board-Sensoreinrichtung 14 bestimmt wurde. Im zweiten Schritt der ersten Folge führen die Distanzmesssensoren 18 eine Distanzmessung durch und übermitteln ihre gemessenen Distanzwerte **d_{m_}j1** für j = 1 ... M an die Kontrolleinrichtung 17; im Ausführungsbeispiel bestimmen die drei Distanzmesssensoren 18 drei gemessene Distanzwerte d_{m_}11, d_{m_}21, d_{m_}31. Für die erste Messposition MP₁ werden im dritten Schritt der ersten Folge aus dem Geometriemodell 21 zu den gemessenen Distanzwerten d_{m_}j1 entsprechende geschätzte Distanzwerte **d_{e_}j1** für j = 1 ... M bestimmt; im Ausführungsbeispiel werden drei geschätzte Distanzwerte d_{e_}11, d_{e_}21, d_{e_}31 bestimmt. Im vierten Schritt der ersten Folge werden die Abweichungen **Δⱼ₁** für j = 1 ... M zwischen den gemessenen Distanzwerten d_{m_}j1 und den entsprechenden geschätzten Distanzwerten d_{e_}j1 berechnet und als Fehlerwerte gespeichert; die erste Folge liefert im Ausführungsbeispiel drei Fehlerwerte Δ₁₁, Δ₂₁, Δ₃₁.

Nach Abschluss der ersten Folge des ersten bis vierten Schrittes wird der Gerätekopf 10 im ersten Schritt der zweiten Folge aus der ersten Messposition MP₁ in die zweite Messposition MP₂ (FIG. 3B) bewegt. Die Bewegung des Gerätekopfes 10 aus der ersten Messposition MP₁ in die zweite Messposition MP₂ wird von der weiteren On-Board-Sensoreinrichtung 19 in Form von ersten Bewegungsdaten erfasst.

Die zweiten Pose-Daten der zweiten Messposition MP₂ können aus den ersten Pose-Daten der ersten Messposition MP₁ und den ersten Bewegungsdaten bestimmt werden. Alternativ können die zweiten Pose-Daten der zweiten Messposition MP₂ aus optimierten ersten Pose-Daten und den ersten Bewegungsdaten bestimmt werden. Dazu wird mithilfe der Fehlerwerte Δ₁₁, Δ₂₁, Δ₃₁ der ersten Folge eine Fehlerminimierung für die Position und/oder Orientierung des Gerätekopfes 10 durchgeführt und das Resultat dieser Fehlerminimierung ergibt die optimierten ersten Pose-Daten.

Im zweiten Schritt der zweiten Folge führen die Distanzmesssensoren 18 eine Distanzmessung durch und übermitteln ihre gemessenen Distanzwerte **d_{m_}j2** für j = 1 ... M an die Kontrolleinrichtung 17; im Ausführungsbeispiel bestimmen die drei Distanzmesssensoren 18 drei gemessene Distanzwerte d_{m_}12, d_{m_}22, d_{m_}32. Für die zweite Messposition MP₂ werden im dritten Schritt der zweiten Folge aus dem Geometriemodell 21 zu den gemessenen Distanzwerten d_{m_}j2 entsprechende geschätzte Distanzwerte **d_{e_}j2** für j = 1 ... M bestimmt; im Ausführungsbeispiel werden drei geschätzte Distanzwerte d_{e_}12, d_{e_}22, d_{e_}32 bestimmt. Im vierten Schritt der zweiten Folge werden die Abweichungen **Δⱼ₂** für j = 1 ... M zwischen den gemessenen Distanzwerten d_{m_}j2, j = 1 ... M und den entsprechenden geschätzten Distanzwerten d_{e_}j2, j = 1 ... M berechnet und als Fehlerwerte gespeichert; die zweite Folge liefert im Ausführungsbeispiel drei Fehlerwerte Δ₁₂, Δ₂₂, Δ₃₂.

Nach Abschluss der zweiten Folge des ersten bis vierten Schrittes wird der Gerätekopf 10 im ersten Schritt der dritten Folge aus der zweiten Messposition MP₂ in die dritte Messposition MP₃ (FIG. 3C) bewegt. Die Bewegung des Gerätekopfes 10 aus der zweiten Messposition MP₁ in die dritte Messposition MP₃ wird von der weiteren On-Board-Sensoreinrichtung 19 in Form von zweiten Bewegungsdaten erfasst.

Die dritten Pose-Daten der dritten Messposition MP₃ können aus den ersten Pose-Daten der ersten Messposition MP₁ sowie den ersten und zweiten Bewegungsdaten bestimmt werden. Alternativ können die dritten Pose-Daten der dritten Messposition MP₃ aus optimierten ersten Pose-Daten sowie den ersten und zweiten Bewegungsdaten bestimmt werden. Dazu wird mithilfe der Fehlerwerte Δ₁₁, Δ₂₁, Δ₃₁ der ersten Folge und Δ₁₂, Δ₂₂, Δ₃₂ der zweiten Folge eine Fehlerminimierung für die Position und/oder Orientierung des Gerätekopfes 10 durchgeführt und das Resultat dieser Fehlerminimierung ergibt die optimierten ersten Pose-Daten.

Im zweiten Schritt der dritten Folge führen die Distanzmesssensoren 18 eine Distanzmessung durch und übermitteln ihre gemessenen Distanzwerte **d_{m_}j3** für j = 1 ... M an die Kontrolleinrichtung 17; im Ausführungsbeispiel bestimmen die drei Distanzmesssensoren 18 drei gemessene Distanzwerte d_{m_}13, d_{m_}23, d_{m_}33. Für die dritte Messposition MP₃ werden im dritten Schritt der dritten Folge aus dem Geometriemodell 21 zu den gemessenen Distanzwerten d_{m_}j3 entsprechende geschätzte Distanzwerte **d_{e_}j3** für j = 1 ... M bestimmt; im Ausführungsbeispiel werden drei geschätzte Distanzwerte d_{e_}13, d_{e_}23, d_{e_}33 bestimmt. Im vierten Schritt der dritten Folge werden die Abweichungen **Δⱼ₃** für j = 1 ... M zwischen den gemessenen Distanzwerten d_{m_}j3 und den entsprechenden geschätzten Distanzwerten d_{e_}j3 berechnet und als Fehlerwerte gespeichert; die dritte Folge liefert im Ausführungsbeispiel drei Fehlerwerte Δ₁₃, Δ₂₃, Δ₃₃.

Nach Abschluss der dritten Folge des ersten, zweiten, dritten und vierten Schrittes wird von der Kontrolleinrichtung 17 mithilfe der Fehlerwerte der ersten Folge Δ₁₁, Δ₂₁, Δ₃₁, der Fehlerwerte der zweiten Folge Δ₁₂, Δ₂₂, Δ₃₂ und der Fehlerwerte der dritten Folge Δ₁₃, Δ₂₃, Δ₃₃ eine Fehlerminimierung für die Position und/oder Orientierung des Gerätekopfes 10 durchgeführt. Die Fehlerminimierung erfolgt beispielsweise mithilfe der Methode der kleinsten Quadrate. Als Resultat der Fehlerminimierung ergibt sich die präzisierte Position und/oder Orientierung des Gerätekopfes 10.

In einer Weiterentwicklung des Verfahrens wird nach der N-ten Folge des ersten bis vierten Schrittes im Rahmen der Fehlerminimierung von der Kontrolleinrichtung ein Fehlermass δ bestimmt, welches die Qualität bzw. Genauigkeit angibt, mit der die Position und/oder Orientierung des Gerätekopfes 10 präzisiert wird. Das Fehlermass 8 wird mit einem Maximalfehler δₘₐₓ, der die erlaubte Ungenauigkeit angibt, verglichen. Wenn das Fehlermass 8 grösser als der Maximalfehler δₘₐₓ ist, wird der Gerätekopf 10 aus der dritten Messposition MP₃ in eine neue Messposition bewegt, in der die Folge des ersten bis vierten Schrittes erneut durchgeführt wird; die neue Messposition wird als vierte Messposition **MP₄** bezeichnet. Die Bewegung des Gerätekopfes 10 aus der dritten Messposition MP₃ in die vierte Messposition MP₄ wird in Form von dritten Bewegungsdaten von der weiteren On-Board-Sensoreinrichtung 19 erfasst.

In einer Weiterentwicklung des erfindungsgemäßen Verfahrens kann die Qualität der Fehlerwerte Δⱼᵢ, die in den Folgen bestimmt werden, von der Kontrolleinrichtung 17 mithilfe geeigneter Berechnungsmethoden bewertet werden und Fehlerwerte mit schlechter Qualität können bei der Fehlerminimierung, die nach Abschluss der letzten Folge des ersten bis vierten Schrittes durchgeführt wird, schwächer gewichtet werden oder unberücksichtigt bleiben. Starke Abweichungen zwischen den gemessenen Distanzwerten und den entsprechenden geschätzten Distanzwerten können auftreten, wenn die Distanzmesssensoren 18 auf Kanten in der Messumgebung 11 gerichtet sind, da bereits kleine Winkelabweichungen zu großen Änderungen bei den gemessenen Distanzwerten führen können.

## Patentansprüche

1. Verfahren zum Präzisieren einer Position und/oder Orientierung eines Gerätekopfes (10) in einer Messumgebung (11) mittels einer Distanzmesseinrichtung (15), die eine Anzahl von M, M ≥ 1 Distanzmesssensoren (18) umfasst und die mit dem Gerätekopf (10) verbunden ist, und einer Kontrolleinrichtung (17), die mit der Distanzmesseinrichtung (16) und einer On-Board-Sensoreinrichtung (14) kommunizierend verbunden ist, wobei die Position und/oder Orientierung des Gerätekopfes (10) mittels der On-Board-Sensoreinrichtung (14) bestimmt und an die Kontrolleinrichtung (16) übermittelt wurde und in der Kontrolleinrichtung (16) ein Geometriemodell (21) der Messumgebung (11) gespeichert wurde, **gekennzeichnet durch** eine Folge eines ersten, zweiten, dritten und vierten Schrittes, die N-fach, N ≥ 1 durchgeführt wird, wobei:
▪ im ersten Schritt der Folge wird der Gerätekopf (10) in der Messumgebung (11) in einer Messposition (MP₁, MP₂, MP₃) angeordnet, wobei für die Messposition (MP₁, MP₂, MP₃) Pose-Daten bestimmt werden,
▪ im zweiten Schritt der Folge führen die Distanzmesssensoren (18) eine Distanzmessung durch und übermitteln ihre gemessenen Distanzwerte (d_{m_}j1, d_{m_}j2, d_{m_}j3) an die Kontrolleinrichtung (17),
▪ im dritten Schritt der Folge werden aus dem Geometriemodell (21) und den Pose-Daten für die Messposition (MP₁, MP₂, MP₃) zu den gemessenen Distanzwerten (d_{m_}j1, d_{m_}j2, d_{m_}j3) entsprechende geschätzte Distanzwerte (d_{e_}j1, d_{e_}j2, d_{e_}j3) bestimmt und
▪ im vierten Schritt der Folge werden die Abweichungen (Δⱼ₁, Δⱼ₂, Δⱼ₃) zwischen den gemessenen Distanzwerten (d_{m_}j1, d_{m_}j2, d_{m_}j3) und den entsprechenden geschätzten Distanzwerten (d_{e_}j1, d_{e_}j2, d_{e_}j3) berechnet und als Fehlerwerte (Δⱼ₁, Δⱼ₂, Δⱼ₃) gespeichert,
und nach der N-ten Folge des ersten bis vierten Schrittes wird mithilfe der Fehlerwerte (Δⱼ₁, Δⱼ₂, Δⱼ₃) eine Fehlerminimierung für die Position und/oder Orientierung des Gerätekopfes (10) durchgeführt und die Position und/oder Orientierung des Gerätekopfes (10) wird von der Kontrolleinrichtung (17) präzisiert.

2. Verfahren nach Anspruch 1, **dadurch gekennzeichnet, dass** die erste Folge des ersten bis vierten Schrittes in einer ersten Messposition (MP₁) durchgeführt wird, wobei die erste Messposition (MP₁) der Position und/oder Orientierung des Gerätekopfes (10) entspricht, die mittels der On-Board-Sensoreinrichtung (14) bestimmt wurde, und als erste Pose-Daten für die ersten Folge die Position und/oder Orientierung des Gerätekopfes (10) verwendet wird, die mittels der On-Board-Sensoreinrichtung (14) bestimmt wurde.

3. Verfahren nach Anspruch 1, **dadurch gekennzeichnet, dass** die Folge des ersten bis vierten Schrittes zweifach in einer ersten Messposition (MP₁) und einer zweiten Messposition (MP₂) durchgeführt wird, wobei die erste Messposition (MP₁) der Position und/oder Orientierung des Gerätekopfes (10) entspricht, die mittels der On-Board-Sensoreinrichtung (14) bestimmt wurde, die zweite Messposition (MP₂) von der ersten Messposition (MP₁) verschieden ist und die Bewegung des Gerätekopfes (10) aus der ersten Messposition (MP₁) in die zweite Messposition (MP₂) von einer weiteren On-Board-Sensoreinrichtung (19) in Form von ersten Bewegungsdaten erfasst wird.

4. Verfahren nach Anspruch 3, **dadurch gekennzeichnet, dass** die zweiten Pose-Daten für die zweite Messposition (MP₂) aus den ersten Pose-Daten der ersten Messposition (MP₁) und den ersten Bewegungsdaten bestimmt werden.

5. Verfahren nach Anspruch 3, **dadurch gekennzeichnet, dass** die zweiten Pose-Daten für die zweite Messposition (MP₂) aus optimierten ersten Pose-Daten und den ersten Bewegungsdaten bestimmt werden, wobei die optimierten ersten Pose-Daten aus der Position und/oder Orientierung des Gerätekopfes (10), die mittels der On-Board-Sensoreinrichtung (14) bestimmt wurde, durch Fehlerminimierung mittels der Fehlerwerte (Δⱼ₁) der ersten Folge bestimmt werden.

6. Verfahren nach Anspruch 1, **dadurch gekennzeichnet, dass** die Folge des ersten bis vierten Schrittes mindestens dreifach durchgeführt wird, wobei die Bewegung des Gerätekopfes (10) aus einer Messposition (MP₁, MP₂) in eine neue Messposition (MP₂, MP₃) von der weiteren On-Board-Sensoreinrichtung (19) in Form von Bewegungsdaten erfasst wird.

7. Verfahren nach Anspruch 6, **dadurch gekennzeichnet, dass** die Pose-Daten für die neue Messposition (MP₂, MP₃) aus den ersten Pose-Daten der ersten Messposition (MP₁) und den Bewegungsdaten bestimmt werden.

8. Verfahren nach Anspruch 6, **dadurch gekennzeichnet, dass** die Pose-Daten für die neue Messposition (MP₂, MP₃) aus optimierten ersten Pose-Daten und den Bewegungsdaten bestimmt werden, wobei die optimierten ersten Pose-Daten aus der Position und/oder Orientierung des Gerätekopfes (10), die mittels der On-Board-Sensoreinrichtung (14) bestimmt wurde, durch Fehlerminimierung mittels der Fehlerwerte (Δⱼ₁, Δⱼ₂) der durchgeführten Folgen des ersten bis vierten Schrittes bestimmt werden.

9. Verfahren nach Anspruch 1, **dadurch gekennzeichnet, dass** nach der N-ten Folge des ersten bis vierten Schrittes im Rahmen der Fehlerminimierung ein Fehlermass (δ) bestimmt wird.

10. Verfahren nach Anspruch 9, **dadurch gekennzeichnet, dass** das Fehlermass (δ) mit einem Maximalfehler (δₘₐₓ) verglichen wird, wobei für den Fall, dass das Fehlermass (δ) grösser als der Maximalfehler (δₘₐₓ) ist, der Gerätekopf (10) in eine neue Messposition (MP₄) bewegt und die Folge des ersten bis vierten Schrittes für die neue Messposition (MP₄) durchgeführt wird.

11. Vorrichtung (14) zum Präzisieren einer Position und/oder Orientierung eines Gerätekopfes (10) mithilfe eines Verfahrens nach einem der Ansprüche 1 bis 10.

12. Vorrichtung nach Anspruch 11, **dadurch gekennzeichnet, dass** die Vorrichtung (15) eine Distanzmesseinrichtung (16), die eine Anzahl von M, M ≥ 1 Distanzmesssensoren (18) umfasst und die mit dem Gerätekopf (10) verbunden ist, und eine Kontrolleinrichtung (17), die mit der Distanzmesseinrichtung (16) und einer mit dem Gerätekopf (10) verbundenen On-Board-Sensoreinrichtung (14) kommunizierend verbunden ist, aufweist.

13. Vorrichtung nach Anspruch 12, **dadurch gekennzeichnet, dass** die Vorrichtung (15) eine weitere On-Board-Sensoreinrichtung (19) aufweist, die am Gerätekopf (10) angebracht ist und die mit der Kontrolleinrichtung (17) kommunizierend verbunden ist.
